# EUROPEAN PATENT APPLICATION

(11) **EP 4 624 019 A1**
(43) Date of publication of application: **01.10.2025**
(21) Application number: 25166365.4
(22) Date of filing: 26.03.2025
(51) Int. Cl.: B01D 45/10, H01M 8/04119, B01D 45/08

(54) **SYSTEMS FOR ROUTING OF FUEL CELL BYPRODUCTS OF A VEHICLE**

(30) Priority: 26.03.2024 US 202463570120 P
(71) Applicant: Daimler Truck North America LLC, Portland, Oregon 97217 (US)
(72) Inventor: Haddadi, Ali, Portland, Oregon, 97217 (US); Mindolovich, Matthew, Farmington Hills, Michigan, 48335 (US); Prelipceanu, Bogdan, Farmington Hills, Michigan, 48335 (US); Fletcher, Steven Wallace, Farmington Hills, Michigan, 48335 (US); De Almeida, Alexandre Luchesi, 13000-000 Campinas - SP (BR)
(74) Representative: Grünecker Patent- und Rechtsanwälte PartG mbB

(57) **Abstract**

In some examples of this technology, a vehicle is disclosed that includes a fuel cell exhaust system for routing of fuel cell byproducts of the vehicle. The vehicle includes at least two fuel cells. Each of the at least two fuel cells have an exhaust port through which byproducts of fuel cell operation flow. The vehicle includes at least two outlet couplers respectively coupled, at a first end, to the exhaust port of each of the fuel cells. The vehicle includes at least two water separators respectively coupled, at an inlet end, to a second end of each of the at least two outlet couplers. The vehicle includes at least two vertical exhaust pipes respectively coupled to a top side of each of the at least two water separators. The water separators separate water from steam produced by the fuel cells.

## Description

### CROSS-REFERENCE TO RELATED APPLICATIONS

This application claims priority to U.S. Provisional Patent Application Serial No. 63/570,120, filed March 26, 2024, which is incorporated by reference herein in its entirety.

### GOVERNMENT SUPPORT CLAUSE

This invention was made with government support under DE-EE0009860 awarded by the U.S. Department of Energy. The government has certain rights in the invention.

### TECHNICAL FIELD

The disclosed technology generally relates to exhaust systems of vehicles and, more specifically, to fuel cell water exhaust systems of vehicles.

### BACKGROUND

Vehicles today leverage diverse fuel and motive force sources, with fuel cells emerging as a notable environmentally friendly option. Fuel cells generate electrical energy through chemical reaction between hydrogen and oxygen. The chemical reaction in the fuel cell produces byproducts such as water vapor or steam that are generally released into the air or onto the road similar to current emissions from vehicles powered by combustion engines.

### BRIEF DESCRIPTION OF THE DRAWINGS

FIG. 1 illustrates a fuel cell water exhaust system for a vehicle, according to an example of the present disclosure.
FIG. 2 illustrates a water separating system of the fuel cell water exhaust system, according to an example of the present disclosure.
FIG. 3 illustrates a water separator of the water separating system, according to an example of the present disclosure.
FIG. 4 illustrates water separating plates of the water separator, according to an example of the present disclosure.

### DETAILED DESCRIPTION

In the following description, certain specific details are set forth in order to provide a thorough understanding of various disclosed examples. However, one skilled in the relevant art will recognize that examples may be practiced without one or more of these specific details, components, materials, and the like. In other instances, well-known structures, associated with fuel cell water exhaust systems, have not been shown or described in detail to avoid unnecessarily obscuring descriptions of the examples of this technology.

Unless the context indicates otherwise, throughout the specification and claims that follow, the word "comprise" and variations thereof, such as, "comprises" and "comprising" are to be construed in an open, inclusive sense that is as "including, but not limited to." Further, the terms "first," "second," and similar indicators of the sequence are to be construed as interchangeable unless the context clearly dictates otherwise.

Reference throughout this specification to "one aspect" or "an aspect" means that a particular feature, structure, or characteristic described in connection with an example is included in at least one aspect. Thus, the appearances of the phrases "in one aspect" or "in an aspect" in various places throughout this specification are not necessarily all referring to the same example. Furthermore, the particular features, structures, or characteristics may be combined in any suitable manner in one or more aspects.

As used in this specification and the appended claims, the singular forms "a," "an," and "the" include plural referents unless the content clearly dictates otherwise. It should also be noted that the term "or" is generally employed in its broadest sense, that is, as meaning "and/or" unless the content clearly dictates otherwise.

According to at least one aspect, the present disclosure relates to a vehicle with a fuel cell water exhaust system for routing of fuel cell byproducts of the vehicle. The vehicle includes at least two fuel cells. Each of the at least two fuel cells has an exhaust port through which byproducts of fuel cell operation flow. The vehicle includes at least two outlet couplers respectively coupled, at a first end, to the exhaust port of each of the at least two fuel cells. The vehicle includes at least two water separators respectively coupled, at an inlet end, to a second end of each of the at least two outlet couplers. The vehicle further includes at least two vertical exhaust pipes respectively coupled to a top side of each of the at least two water separators. The at least two water separators are arranged substantially parallel to one or more of a vehicle chassis and/or vehicle floorboard.

The present disclosure in other examples also relates to a water separating system for a vehicle. The water separating system may be used for selectively collecting and reusing water produced by fuel cells of the vehicle. However, it is to be understood that the water separating system as herein disclosed is in no way limited to use with a fuel cell in a vehicle. For example, and without limitation, the water separator as herein described can be used with any application for which it is desired to convert saturated steam into liquid water.

In certain aspects, the water separating system comprises a water separator, which efficiently separates water from steam produced by the fuel cells. After separation, the steam passes through extended exhaust tubes of the vehicle and further undergoes condensation. Thus, steam release to the environment is minimized or avoided altogether. The positioning of exit openings of the exhaust tubes to the environment is such that any steam escaping the exhaust tubes does not adversely impact any aspect of vehicle operation of nearby vehicles. The water separator operates to optimize, reduce, and/or avoid back pressure. Accordingly, the power consumption by the fuel cells, and overall operation, is improved.

In certain aspects, the water separator includes removable water separating plates, removable baffles, and vertical exhaust pipes that reduce any escaping steam and minimize negative impacts for drivers of nearby vehicles, for example visibility and the like, and improves maintenance of the fuel cells. Based on region, application, and environment, the removable water separating plates and/or removable baffles may be replaced with another plate or another package of baffles, respectively, to improve efficiency of the water separator, and in turn, overall operation of the fuel cell(s).

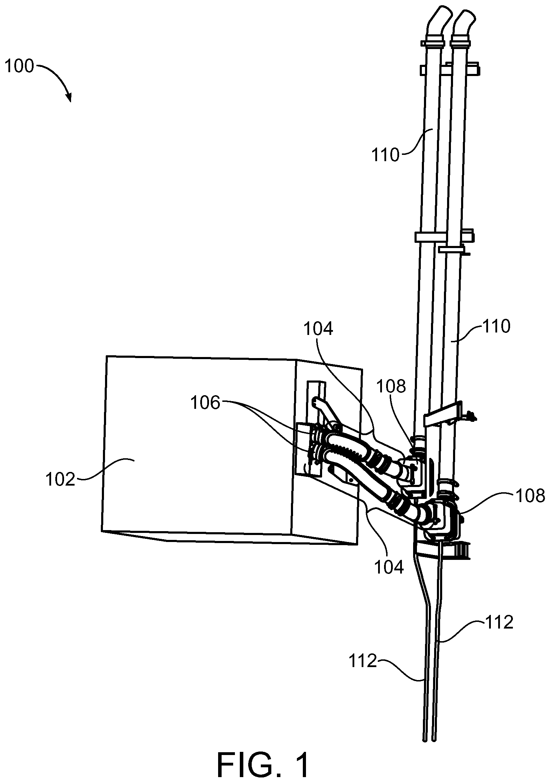

Referring now to FIG. 1, an exemplary fuel cell water exhaust system 100 is illustrated. In some examples, the fuel cell water exhaust system 100 is used in the context of a vehicle (not shown). The vehicle can be a heavy vehicle. The heavy vehicle may be categorized from class 1 to class 8. Class 1 includes vehicles that weigh 6000 pounds (lbs) and less, such as, but may not be limited to, minivans, cargo vans, sports utility vehicles (SUVs), and pickup trucks. Class 2 includes vehicles that weigh between 6001 lbs to 10000 lbs, such as, but may not be limited to, minivans, cargo vans, full-size pickup trucks, and step vans. Further, class 3 includes vehicles that weigh between 10001 lbs to 14000 lbs, such as, but may not be limited to, walk-in vehicles, box trucks, city delivery vehicles, and heavy-duty pickup trucks. Class 4 includes vehicles that weigh between 14001 to 16000 lbs such as, but not may not be limited to, large walk-in trucks, box trucks, and city delivery trucks. Class 5 includes vehicles that weigh between 16001 lbs to 19500 lbs, such as, but may not be limited to, bucket trucks, large walk-in vehicles, city delivery buses, and the like. Class 6 includes vehicles that weigh between 19501 to 26000 lbs, such as, but may not be limited to, beverage trucks, school buses, single-axles, and rack trucks. Class 7 includes vehicles that weigh between 26001 to 33000 lbs, such as, but may not be limited to, refuse vehicles, furniture carrying trucks, city transit buses, and truck tractors. Also, class 8 includes vehicles that weigh 33001 lbs and more, such as, but may not be limited to, dump trucks, sleeper vehicles, cement trucks, truck tractors and the like.

The fuel cell water exhaust system 100 can include one or more fuel cells 102. In the illustrated example, at least two fuel cells 102 can be implemented. In other examples, a single fuel cell can be implemented as well. For simplicity, the at least two fuel cells 102 are shown as a single block in FIG. 1. In some examples, the fuel cells 102 are coupled to a chassis (not shown) of the vehicle. Generally, the fuel cells 102 utilize hydrogen as a fuel source to generate electricity through electrochemical reactions. The generated electricity then powers an electric motor that is configured to propel the vehicle. The fuel cells 102 produce at least water and steam as byproducts (also referred to herein as fuel cell byproducts). In an example, each of the fuel cells 102 is equipped with an exhaust port 106 through which byproducts of fuel cell operation flow.

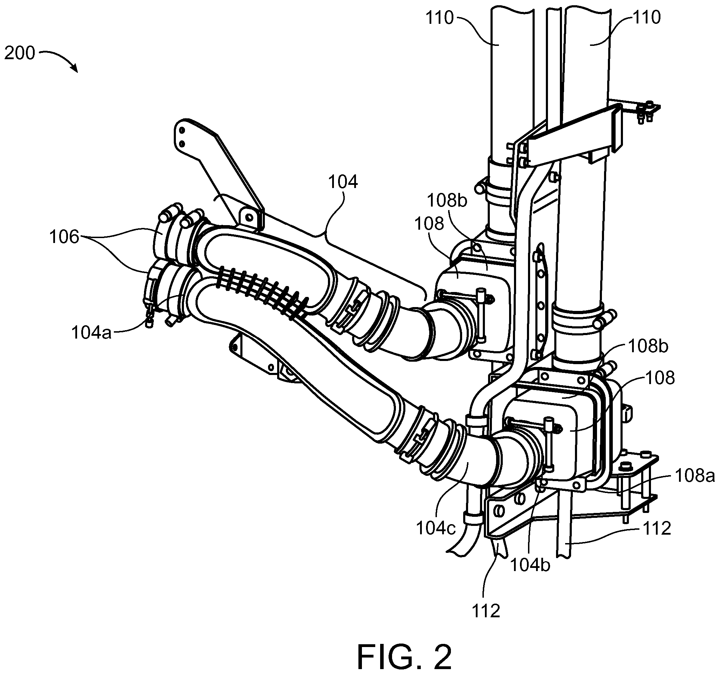

The fuel cell water exhaust system 100 in this example further includes at least two outlet couplers 104, at least two water separators 108, and at least two vertical exhaust pipes 110. Of course, in examples that include a single fuel cell, such a system may correspondingly include a single water separator. The outlet couplers 104 are respectively coupled, at a first end, to the exhaust port 106 of each of the fuel cells 102. The water separators 108 are respectively coupled, at an inlet end, to a second end of each of the outlet couplers 104. The first end and second end of the outlet couplers 104 are indicated in FIG. 2 by reference numerals 104a and 104b, respectively, as discussed in more detail below.

In an example, the water separators 108 are coupled to a cab (not shown) of the vehicle. The water separators 108 may be arranged substantially parallel with respect to one or more of the chassis and/or floorboard of the vehicle. Each of the outlet couplers 104 includes a flexible portion to allow movement of the cab with respect to the chassis. In an example, movement may range from 40 mm to 1000 mm, although other movement distances or ranges can also be used in other examples. The outlet coupler 104 with the flexible portion is described in detail below in conjunction with FIG. 2 and indicated as reference numeral 104c.

The water separators 108 are operated to separate water and steam. Further, each of the water separators 108 includes a drain opening (not shown) in a bottom side 108a opposite to a top side 108b of the water separators 108.

In addition, the fuel cell water exhaust system 100 includes at least two drain tubes 112. The drain tubes 112 are coupled to a respective one of the drain openings included on the bottom side 108a of the water separators 108, extending downwards from each of a respective one of the two water separators 108 to route the water away from the water separators 108. In an alternate example, the drain tubes 112 may extend in any other suitable direction with respect to the water separators 108.

FIG. 2 illustrates a water separating system 200 of the fuel cell water exhaust system 100 for the vehicle, according to an example of the present technology. The water separating system 200 is a part of the fuel cell water exhaust system 100 of FIG. 1, with the fuel cells 102 of the fuel cell water exhaust system 100 coupled to the water separating system 200.

The water separating system 200 comprises various components such as the outlet couplers 104 coupled, at a first end 104a, to the exhaust port 106 of the fuel cells 102, the water separators 108 respectively coupled, at an inlet end, to a second end 104b of each of the outlet couplers 104, and the vertical exhaust pipes 110 respectively coupled to a top side 108b of each of the water separators 108. In an example, the vertical exhaust pipes 110 are attached to a side extender (not shown) of the cab (not shown). The components of the water separating system 200 are similar to that of the fuel cell water exhaust system 100 as explained in FIG. 1 and hence, the description of the similar components is not repeated herein for brevity.

In an example, each of the outlet couplers 104 includes a flexible portion 104c that allows some amount of movement of the fuel cells 102 relative to the water separators 108. In an example, the fuel cells 102 are coupled to a chassis (not shown) of the vehicle, and the water separators 108 are coupled to a cab (not shown) of the vehicle. When the vehicle is in operation, there is movement between the side extender and the water separators 108. In an example, the water separators 108 may be made of plastic and the vertical exhaust pipes 110 may be made of aluminum. Therefore, the water separators 108 may be coupled to the vertical exhaust pipes 110 through flex hoses to provide a soft connection between the water separators 108 and the vertical exhaust pipes 110 for absorbing vibrations caused during vehicle operation without applying stress to the water separators 108. In addition, the flex hoses support the movement between the side extender and the water separators 108 during vehicle operation.

In an example, the water separators 108 are configured to separate water and steam from each other. The steam is further directed towards the vertical exhaust pipes 110. The vertical exhaust pipes 110 extend substantially to the height of the cab of the vehicle. In an example, the vertical exhaust pipes 110 have a length of about 0.5 meters to about 3 meters, although other lengths and/or sizes can also be used in other examples. Due to the length of the vertical exhaust pipes 110, the steam undergoes further condensation and transforms back into water. For example, heat energy in the steam may be dissipated over the length of the vertical exhaust pipes 110, causing the steam to condense to the liquid state. Accordingly, the amount of steam ejected out of the vehicle through the vertical exhaust pipes 110 is minimized or completely avoided during a drive cycle.

In an example, the vertical exhaust pipes 110 are respectively coupled to a top side 108b of each of the water separators 108. An outlet end of each of the vertical exhaust pipes 110 opposite to the respective one of the water separators 108 forms an angle with respect to a centerline of the vertical exhaust pipes 110. The angle is formed such that any remaining steam that is ejected does not impact or otherwise adversely interfere with any other vehicles on the road. Specifically, the outlet ends, or exhaust top stacks, are carefully engineered with an outboard angulation, a design that efficiently directs steam away from the driver's field of vision, and trailer. The configuration prioritizes operational visibility, and additionally prevents the lateral dispersion of steam towards adjacent vehicles. In an example, the angle may be 45 degrees. In another example, the angle may be between 20 to 70 degrees. In yet another example, the angle may be in a range of about 30 to 50 degrees, ang other angles can also be used in other examples. In some examples, the angle may vary as a function of the length of the vertical exhaust pipes 110 and the placement of the water separators 108.

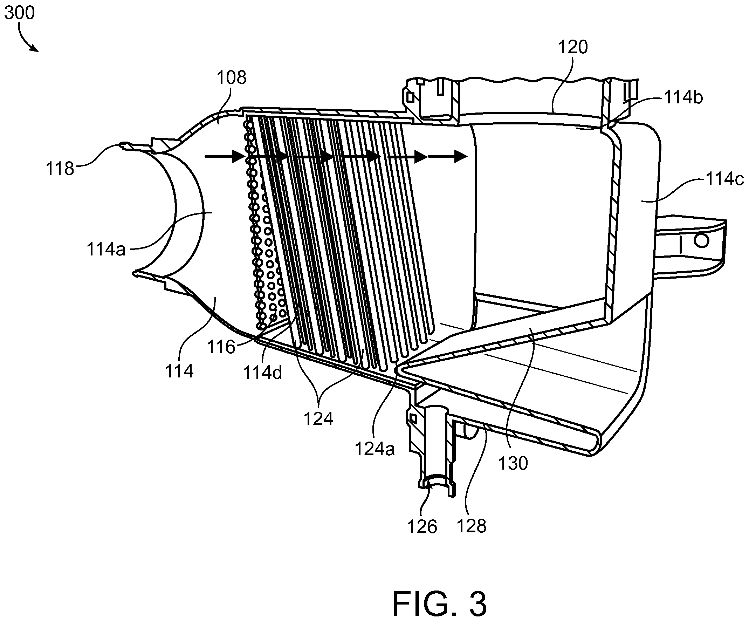

The water separating system 200 further includes drain tubes 112, which are coupled to a respective one of the drain openings formed by the water separators 108. The drain tubes 112 extend downward from each of the respective one of the water separators 108. Such an arrangement of drain tubes 112 may establish a precise path for directed flow of the water separated from the steam. In an example, the drain tubes 112 may be utilized, at least in part, to facilitate the dumping of exhaust water from the water separators 108 to the ground. In some examples, the water separators 108 may include a water separating plate 116 (illustrated in FIG. 3) that is substantially orthogonal to the bottom side 108a that is substantially opposite to the top side 108b. In other examples, the water separating plate 116 may be positioned at an angle relative to the bottom side 108a that is substantially opposite to the top side 108b. The details of the water separating plate 116 will now be further explained with respect to FIG. 3.

FIG. 3 illustrates an internal view 300 of the water separator 108 of the water separating system 200, according to an example of the present disclosure. The water separator 108 is configured to separate water and steam (the byproducts produced by the fuel cells 102) from each other. The steam and water flow inside the water separator 108 in a direction as shown with arrows in FIG. 3. The steam is directed towards the vertical exhaust pipes 110 (as explained above with reference to FIG. 2), and any remaining steam is ejected out of the vehicle through the exhaust pipes 110. In some examples, the water can be selectively collected and/or selectively used and/or selectively discarded.

The water separator 108 includes a body 114 forming a cavity therein. Body 114 includes a front side wall 114a, a back side wall 114b, a left side wall, a right side wall, a top side wall 114c, and a bottom side wall 114d. Body 114 includes an inlet 118 formed in the front side wall 114a, which allows the water and steam to enter the water separator 108 from the fuel cells 102 through the outlet couplers 104. Further, body 114 includes an outlet 120 formed in the top side wall 114c, which enables the routing of steam from the water separator 108 to the exhaust pipes 110. The outlet 120 can be formed closer to the back side wall 114b, which is opposite to the front side wall 114a and between the left side wall and the right side wall. The bottom side wall 114d forms a drain opening 126.

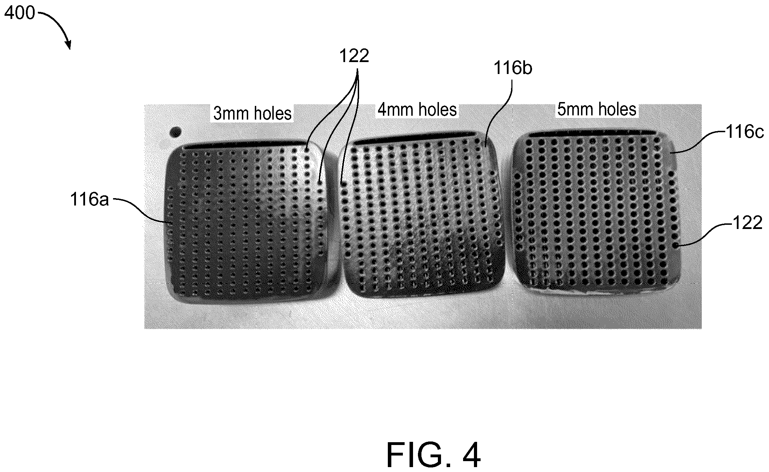

Further, water separator 108 includes the water separating plate 116 positioned within the cavity of body 114 for separating water from steam. In an example, the water separating plate 116 may be substantially orthogonal to the bottom side wall 114d that is substantially opposite to the top side wall 114c. In another example, the water separating plate 116 is positioned at an angle relative the bottom side wall 114d that is substantially opposite to the top side wall 114c. The angle may be between 60 degrees and 90 degrees, although other angles can also be used in other examples. The water separating plate 116 (i.e., the first vertical plate shown in FIG. 3) includes a plurality of holes (explained further below with reference to FIG. 4).

In an example, the water separating plate 116 may be a removable plate. The water separating plate 116 is at least partially housed within the cavity of the body 114. In some examples, the water separating plate 116 is fully housed within the cavity of body 114.

Further, the water separator 108 includes one or more baffle plates 124. In an example, the one or more baffle plates 124 are operable to be removed. In an example, the one or more baffle plates 124 may be at least partially housed within the cavity. The one or more baffle plates 124 may be angled relative to the bottom side wall 114d substantially opposite to the top side wall 114c. The one or more baffle plates 124 are operable to be removed from the housing. In an example, the one or more baffle plates 124 may include a plurality of baffle plates.

The one or more baffle plates 124 may comprise angled baffle plates that include columns with separation between the columns. In an example, a width of the columns in the one or more baffle plates 124 can be the same or different. In another example, the one or more baffle plates 124 are located between the water separating plate 116 and the outlet 120. In another example, the one or more baffle plates 124 may be angled with respect to bottom side wall 114d, for example angled forward towards inlet 118 (e.g., between a 60 degree angle and a 90 degree angle with respect to bottom side wall 114d), or backward towards outlet 120 (e.g., between a 60 degree angle and a 90 degree angle with respect to bottom side wall 114d). In this example, it is to be understood that a 90 degree angle means orthogonal with respect to bottom side wall 114d.

Each of the one or more baffle plates 124 includes a plurality of structures 124a spaced a predetermined distance apart. In at least one example, the plurality of structures 124a can be cylindrical. In other examples, the plurality of structures 124a can take other shapes such as triangle prism, cuboid, conical, and the like.

The water separator 108 further includes a first drain member 128 that is arranged substantially parallel to the bottom side wall 114d, which is substantially opposite to the top side wall 114c. In an example, the first drain member 128 may be located at least partially above a drain opening 126 formed in the bottom side wall 114d. The water separator 108 further includes a second drain member 130 that is arranged at an angle with respect to the first drain member 128. The second drain member 130 routes the water, coming from the water separating plates 116 and the one or more baffle plates 124, to the first drain member 128 that further routes the water to the drain opening 126. Furthermore, steam which has condensed to liquid water within vertical exhaust pipes 110 may drain back into the cavity of body 114, where second drain member 130 directs the water towards bottom side wall 114d and towards drain opening 126 by way of first drain member 128. In an example, the first drain member 128 and the second drain member 130 may collectively drain the water outside the vehicle through the drain opening 126. In another example, the first drain member 128 may be independently used to drain the water outside the vehicle through drain opening 126.

FIG. 4 illustrates an overview 400 of the water separating plates 116 of the water separator 108, according to an example of the present disclosure. As a non-limiting example, three water separating plates 116a, 116b, and 116c (collectively referred to as water separating plates 116) of the water separators 108 are illustrated in FIG. 4, although another number of water separating plates can be used in other examples. The water separating plates 116 have a plurality of passages formed therethrough and are located within body 114 of the water separator 108. In an example, the plurality of passages may be formed as through holes 122 having a predetermined diameter. The through holes 122 may have a different predetermined diameter based on one of more driving conditions of the vehicle including operating elevation, environmental temperature, environmental humidity, environmental conditions, operating speeds, and/or operating load, for example.

In an example, the through holes 122 of the water separating plate 116a may have a predetermined diameter of about 3 millimeters (mm). In another example, the through holes 122 of the water separating plate 116b may have a predetermined diameter of about 4 mm. In another example, the through holes 122 of the water separating plate 116c may have a predetermined diameter of about 5 mm. As would be understood, the predetermined diameter of the through holes 122 is not limited to the above-mentioned values and other sizes of the through holes 122 can also be used in other examples. Through holes 122 allow a clear passage for water and steam, which further helps in separating water and steam from each other and reducing back pressure on the fuel cells 102.

The fuel cell water exhaust system 100 or the water separating system 200 is configured to collect water along with the steam from the fuel cells 102, selectively reuse the water within the vehicle, and/or discard the water. The water separating system 200 is configured to selectively collect water based on various operating conditions of the vehicle, such as, but not limited to, vehicle heating or cooling requirements, environmental temperature conditions, and/or the like. Further, the water separating system 200 may have heating or cooling capabilities that allows the water separating system 200 to maintain the water at an optimal temperature for efficient use.

The water separating system 200 selectively dumps the water based on a control scheme. The control scheme relies on similar features as mentioned above, such as, but not limited to, vehicle operating conditions, heating or cooling requirements, and/or environmental temperature conditions. The water separating system 200 performs the selective dumping of the water to optimize the use of water resources and ensure that water is only released when necessary. The present technology recognizes that efficient management of byproducts of the fuel cell 102 can enhance performance and mitigate the environmental impact of vehicles powered by the fuel cells 102.

For clarity of explanation, in some instances, the present disclosure may be presented as including individual functional blocks including functional blocks comprising components. Any of the steps, operations, functions, or processes described herein may be performed or implemented by a combination of the fuel cell water exhaust system 100 or the water separating system 200.

Furthermore, while the examples illustrated herein show the various components of the system collocated, some components of the system can be arranged in a different manner other than explained above and can be used in combination with each other. It will be appreciated from the preceding description, and for reasons of efficiency, that the components of the system can be arranged in any vehicle without affecting the operation of the system.

A number of variations and modifications of the disclosure can be used. It would be possible to provide for some features of the disclosure without providing others.

The foregoing discussion of the disclosure has been presented for purposes of illustration and description. The foregoing is not intended to limit the disclosure to the form or forms disclosed herein. In the foregoing Detailed Description for example, various features of the disclosure are grouped together in one or more examples, configurations, or aspects for the purpose of streamlining the disclosure. The features of the examples , configurations, or aspects of the disclosure may be combined in alternate examples , configurations, or aspects other than those described above. Hence, the present disclosure and drawings should not be considered in a limiting sense, as it is understood that an invention presented within a disclosure is in no way limited to those examples specifically illustrated.

Accordingly, the above description and any accompanying drawings, illustrations, and figures are intended to be illustrative but not restrictive. The scope of any invention presented within this disclosure should, therefore, be determined not with simple reference to the above description and those examples shown in the figures, but instead should be determined with reference to the pending claims along with their full scope or equivalents.

Also, though the description of the disclosure has included description of one or more examples , configurations, or aspects and certain variations and modifications, other variations, combinations, and modifications are within the scope of the disclosure (e.g., as may be within the skill and knowledge of those in the art, after understanding the present disclosure). It is intended to obtain rights, which include alternative examples , configurations, or aspects to the extent permitted, including alternate, interchangeable and/or equivalent structures, functions, ranges, or steps to those claimed, whether or not such alternate, interchangeable and/or equivalent structures, functions, ranges, or steps are disclosed herein, and without intending to publicly dedicate any patentable subject matter.

## Claims

1. A water separator, comprising:
a body forming a cavity and having a top side wall;
a water separating plate at least partially housed within the cavity; and
at least one baffle plate at least partially housed within the cavity, wherein the at least one baffle plate is angled relative to a bottom side wall of the body substantially opposite to the top side wall.

2. The water separator of claim 1, wherein the body further comprises a front side wall, a back side wall, a left side wall, a right side wall, an inlet formed in the front side wall, and an outlet formed in the top side wall closer to the back side wall than the front side wall, wherein the back side wall is opposite to the front side wall and between the left side wall and the right side wall.

3. The water separator of claim 2, wherein the at least one baffle plate comprises a plurality of baffle plates located between the water separating plate and the outlet, wherein each of the plurality of baffle plates comprises a plurality of structures spaced apart.

4. The water separator of any one of claims 1 to 3, wherein the bottom side wall forms a drain opening.

5. The water separator of any one of claims 1 to 4, further comprising a first drain member that is arranged substantially parallel to the bottom side wall and a second drain member that is arranged at an angle with respect to the first drain member.

6. A water separating system, comprising:
at least two outlet couplers respectively coupled, at a first end, to an exhaust port of each of at least two fuel cells;
at least two of the water separator of any one of claims 1 to 6 respectively coupled, at an inlet end, to a second end of each of the at least two outlet couplers; and
at least two vertical exhaust pipes respectively coupled to a top side of each of the at least two water separators.

7. A vehicle, comprising the at least two fuel cells having the exhaust port through which byproducts of fuel cell operation flow and at least one of the water separating system of claim 6.

8. The vehicle of claim 7, wherein the at least two water separators are arranged substantially parallel to one or more of a chassis of the vehicle or a floorboard of the vehicle, the at least two vertical exhaust pipes extend at least substantially to a height of a cab of the vehicle, the at least two fuel cells are coupled to a chassis of the vehicle, and the at least two water separators are coupled to the cab.

9. The vehicle of any one of claim 7 to 8, wherein the water separating plate comprises a plurality of passages formed therethrough and having a different predetermined diameter based on one of more driving conditions of the vehicle including operating elevation, environmental temperature, environmental humidity, environmental conditions, operating speeds, or operating load.

10. The vehicle of any one of claims 7 to 9, wherein the water separating plate is substantially orthogonal to a bottom side of each of the at least two water separators that is substantially opposite to the top side of each of the at least two water separators.

11. The vehicle of any one of claims 7 to 9, wherein the water separating plate is positioned at an angle relative to a bottom side of each of the at least two water separators that is substantially opposite to the top side of each of the at least two water separators.

12. The vehicle of any one of claims 7 to 9, further comprising at least two of the water separator of claim 5, wherein one or more of the plurality of baffle plates are formed at an angle relative to a bottom side of each of the at least two water separators substantially opposite to the top side of each of the at least two water separators.

13. The vehicle of any one of claims 7 to 9, wherein each of the at least two water separators includes a drain opening in a bottom side opposite to the top side, wherein the vehicle further comprises at least two drain tubes coupled to a respective one of the drain openings, wherein the at least two drain tubes extend downward from each of a respective one of the at least two water separators.

14. The vehicle of any one of claims 7 to 13, wherein another outlet of each of the at least two vertical exhaust pipes opposite to a respective one of the at least two water separators forms an angle with respect to a centerline of a respective one of the at least two vertical exhaust pipes.

15. The vehicle of any one of claims 7 to 14, wherein each of the at least two outlet couplers includes a flexible portion to allow movement of the at least two fuel cells relative to the at least two water separators.
